# EUROPÄISCHE PATENTSCHRIFT

(11) **EP 1 245 415 B1**
(45) Veröffentlichungstag und Bekanntmachung des Hinweises auf die Patenterteilung: **24.01.2007**
(21) Anmeldenummer: 02004452.5
(22) Anmeldetag: 27.02.2002
(51) Int. Cl.: B60G 7/02, F16F 1/38

(54) **Gummilager für Fahrwerksteile in Kraftfahrzeugen**
Rubber bearing for suspension parts in motor vehicles
Palier de caoutchouc pour éléments de suspension de véhicules à moteur

(30) Priorität: 30.03.2001 DE 10116053
(43) Veröffentlichungstag der Anmeldung: 02.10.2002
(73) Patentinhaber: ZF Boge Elastmetall GmbH, 49401 Damme (DE)
(72) Erfinder: Testroet, Martin, 53757 Sankt Augustin (DE)

(56) Entgegenhaltungen:
- EP-A- 0 020 790
- EP-A- 0 353 347
- EP-A- 0 529 629
- EP-A- 1 013 961
- FR-A- 1 253 786
- FR-A- 1 297 248
- GB-A- 390 197
- US-A- 5 181 784

## Beschreibung

Die Erfindung bezieht sich auf ein Gummilager für Fahrwerksteile in Kraftfahrzeugen, bestehend aus
- einem in ein erstes Fahrzeugteil einbaubaren Innenrohr,
- einem darauf gleitend drehbeweglich, konzentrisch angeordneten Zwischenteil,
- einem das Zwischenteil festhaftend umschließenden, in ein zweites Fahrzeugteil einbaubaren Elastomerkörper, wobei gegebenenfalls der Elastomerkörper mit einem Außenrohr umgeben ist.

Es sind bereits Gummilager für Fahrwerksteile bekannt (z.B. EP 0.697.298 B1), bei denen der Elastomerkörper auf einem Außenrohr befestigt ist, wobei zwischen dem Außenrohr und dem Innenrohr zusätzlich eine Gleitbuchse aufgenommen ist, welche aus einem Werkstoff besteht, der gute Gleiteigenschaften aufweist. Der äußere Umfang des Elastomerkörpers kann dabei mit einem weiteren Außenrohr versehen sein. Bei dieser Anordnung ist von Nachteil, dass durch die Vielzahl der Einzelteile eine aufwendige Montage notwendig ist um das gesamte Gummilager in einbaufertigen Zustand zu bringen. Darüber hinaus hat sich herausgestellt, dass aufgrund der Mehrteiligkeit radial innerhalb des Elastomerkörpers die zu erfüllenden Dauerlaufeigenschaften unter Umständen kaum oder schwierig zu erreichen sind.

Die gattungsbildende EP 1 013 961 A2 offenbart ein Gummilager für Fahrwerksteile in Kraftfahrzeuge, bestehend aus einem in ein erstes Fahrzeugteil einbaubaren Innenrohr, einem darauf gleitend drehbeweglich, konzentrisch angeordneten Zwischenteil, einem das Zwischenteil festhaftend umschließenden, in ein zweites Fahrzeugteil einbaubaren Elastomerkörper, wobei der Elastomerkörper mit einem Außenrohr umgeben ist und wobei das mit dem Elastomerkörper fest verbundene Zwischenteil auf seiner inneren Umfangsfläche mit einer Gleitschicht umgeben ist. Das Zwischenteil weist des Weiteren über seine axiale Länge einen Spalt auf. Hinweise zur Herstellung des Lagers sind dieser Schrift nicht zu entnehmen.

Die GB 390,197 zeigt ebenfalls ein Gummilager für Fahrwerksteile in Kraftfahrzeugen mit einem Bolzen mit einem darauf gleitend, drehbeweglich, konzentrisch angeordneten Zwischenteil, welches als ein aus Kupfer oder Bronze gefertigtes Gleitlager mit einer inneren Fläche ausgebildet ist. Die innere Fläche weist Einkerbungen auf, aber keine separate Gleitfläche. Das Zwischenteil weist des Weiteren einen Spalt auf und ist in einen Elastomerkörper montiert. Der Elastomerkörper wiederum ist in ein Außenrohr eingepresst, dass in ein zweites Fahrzeugteil einbaubar ist. Ein Verfahren zur Herstellung des Gummilagers ist auch dieser Schrift nicht zu entnehmen.

Aufgabe der Erfindung ist es, ein Herstellungsverfahren für eine wartungsfreie, elastische und nahezu rückstellmomentenfreie Lagerung für Fahrwerksanwendungen, insbesondere für Stoßdämpfer, Federbeine, Lenker aller Art, Blattfederaugen oder Stabilisatoraugen zu schaffen, die fertigungstechnisch einfach und sicher zu handhaben ist, so dass eine geringere Ausschussproduktion erzielt wird.

Gelöst wird die Aufgabe durch ein Verfahren zur Herstellung eines Gummilagers, welches aus einem in ein erstes Fahrzeugteil einbaubaren Innenrohr, einem darauf gleitend drehbeweglich, konzentrisch angeordneten Zwischenteil, welches auf seiner inneren Umfangsfläche mit einer Gleitschicht versehen ist und über die axiale Länge einen Spalt aufweist, und einem das Zwischenteil festhaftend umschließenden, in ein zweites Fahrzeugteil einbaubaren Elastomerkörper besteht, bei welchem erfindungsgemäß, während der Vulkanisation der Spalt des Zwischenteils derart zugedrückt wird, so dass kein Elastomer in das Bauteil überläuft.

Gemäß einer vorteilhaften Ausführungsform ist vorgesehen, dass bei der Vulkanisation der Spalt des Zwischenteils durch werkzeugseitige Vorkehrungen zugedrückt wird. Des Weiteren werden bei einer weiteren vorteilhaften Ausführungsform die Stimflächen des Zwischenteils zugedrückt, so dass kein Gummi in das Bauteil überläuft und weder die am Innenumfang angeordnete Gleitschicht beeinflusst, noch der Fertigungsaufwand aufwendig gestaltet werden muss.

Mit der erfindungsgemäßen Lösung wird nun ein Verfahren bereitgestellt, mit dem auf besonders einfache und sichere Weise verhindert wird, dass während der Vulkanisation Elastomer auf die Gleitschicht gelangen kann und diese somit nicht beschädigen kann. Zudem wird auch sichergestellt, dass im Spalt kein Elastomer mehr verbleiben kann, so dass der Spalt bei der Montage des Gummilagers geschlossen werden kann. Das erfindungsgemäße Verfahren ermöglicht somit auch eine Verminderung der Nacharbeit und der Ausschussproduktion, wodurch die Kosten erheblich gesenkt werden können.

Das Zwischenteil ist mit dem Elastomerkörper fest haftend verbunden. Dieses Zwischenteil besteht dabei aus einem metallischen Träger mit einer festhaftend aufgebrachten Gleitschicht an der inneren Umfangsfläche, wobei der eigentliche Werkstoff des Zwischenteiles vorzugsweise aus Stahlblech hergestellt ist, so dass eine Oberflächen-behandlung für den späteren Vulkanisiervorgang z.B. Verzinken, Chromatisieren oder eine Zink/Nickelbeschichtung in chromatierter Ausführung ohne aufwendiges Abdecken der inneren Gleitschicht zur Vorbehandlung durch Sandstrahlen erzeugt werden kann.Die Gleitschicht besteht dabei vorzugsweise aus einem PTFE-Compount-Material.

Das Zwischenteil kann als gerollte Büchse ausgebildet sein, wobei mit Vorteil das Zwischenteil über die axiale Länge einen Spalt aufweist. Vorteilhaft ist hierbei, dass das Zwischenteil in Form der gerollten Buchse derart ausgeführt ist, dass die Längsseite mit einem Rollspalt versehen ist, so dass bei Einbringen des Innenrohres durch das Zwischenteil eine leichte Vorspannung erzeugt werden kann um damit eine Transportsicherung zu erzielen. In dieser Situation öffnet sich der Rollspalt leicht. Im Betrieb des Gummilagers liegt jedoch das Losbrechmoment bei Verdrehbewegung sehr niedrig, so dass sich eine Verdrehbewegung über 360° ohne nennenswerte Rückstellmomente bewerkstelligen lassen kann.

Die äußere Umfangsfläche des Innenrohres kann ebenfalls mit einer Gleitschicht versehen sein.

Das Zwischenteil ist auf dem Innenrohr vorteilhaft mit Vorspannung montiert. Vorteilhaft ist hierbei, dass die Vorspannung für einen spielfreien und reibungsarmen und dabei selbst nachstellenden Sitz der Lagerung sorgt, so dass eventuell auftretende Unebenheiten oder Toleranzen im Innenrohr nach deren Verschleiß oder Überwindung durch die Vorspannung der gerollten Buchse selbständig nachgestellt und damit spielfrei und verschleißfrei bleibt.

Des weiteren kann der Elastomerkörper oder das dem Elastomerkörper umgebende Außenrohr mit radialer Vorspannung im zweiten Fahrzeugteil aufgenommen werden. Von Vorteil ist hierbei, wenn das Außenrohr einen axial verlaufenden Längsspalt aufweist.
Es ist dabei von Vorteil, dass durch die Montage des ge-samten Lagerelementes in ein zweites Fahrzeugteil eine Vorspannung auf das Gummilager aufgebracht wird. Hierdurch wird die Lebensdauer des Gummi-lagers positiv beeinflusst.

Die Anwendung eines solchen Gummilagers kann z.B. als Gelenklager in einem Schwingungsdämpfer vorgenommen werden, wobei dann die Beanspruchungen der Kolbenstange durch das rückstellmomentarme Gelenklager drastisch reduziert werden. Es können dadurch die Durchmesser der Kolbenstangen reduziert werden oder die angrenzenden Bauteile entsprechend kleiner dimensioniert werden. Auf der anderen Seite lässt sich bei gleichem Bauraum die Dauerlauffestigkeit erhöhen.

Der Montageaufwand wird insgesamt vereinfacht und reduziert, da das Gummilager als unverlierbare Baueinheit hergestellt werden kann. Darüber hinaus wird durch das Gummilager der Komfort im Fahrwerk eines Kraftfahrzeuges verbessert, da die rückstellmomentarme elastische Lagerung für ein besseres Ansprechverhalten der einzelnen Fahrwerkkomponenten sorgt, so dass wiederum positive Einflüsse für die Sicherheit und Fahrdynamik erzielt werden können. Hierbei ist es besonders vorteilhaft, wenn ein derartiges Gummilager in hochsensiblen und intelligenten Fahrwerkskomponenten, wie z.B. einer variablen verstellbaren Schwingungsdämpferkomponenten, sind.

Bevorzugte Ausführungsbeispiele der Erfindung sind in den Zeichnungen schematisch dargestellt.

### Es zeigt:

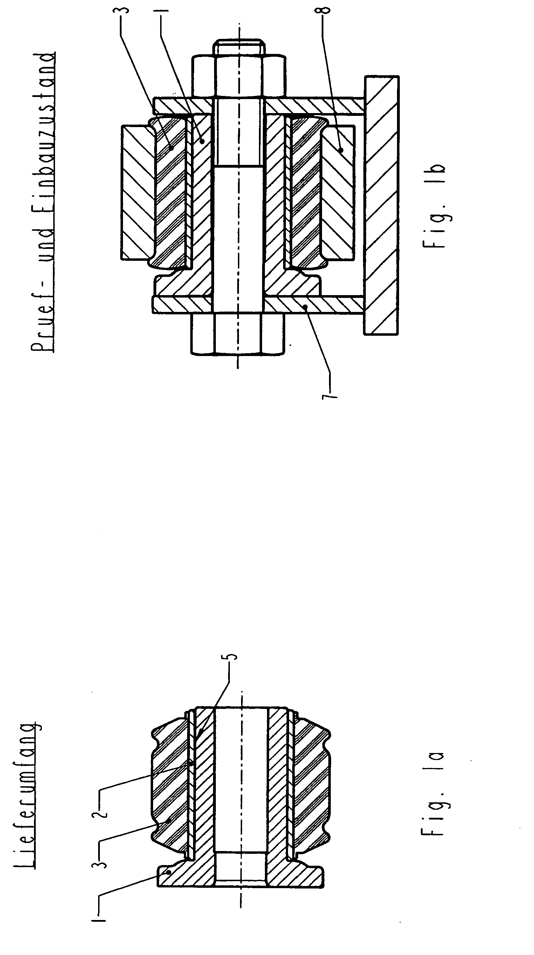

Figur 1 bis 5 verschiedene Ausführungsformen eines entsprechenden Gummilagers.

Aus der Figur 1a und 1b geht ein Gummilager hervor, bei dem das Innenrohr 1 mit einem Zwischenteil 2 umgeben ist, wobei das Zwischenteil 2 mit dem Elastomerkörper 3 fest verbunden ist. Auf dem Innenumfang des Zwischenteiles 2 ist die Gleitschicht 5 vorgesehen. Dieses Gummilager ist auf der einen Seite mit einem Radialansatz 6 versehen, welcher als Anschlag für Axialbewegungen im eingebauten Zustand dient. Aus der Figur 1a ist der eingebaute Zustand zu erkennen, indem das Innenrohr 1 mit einem ersten Fahrzeugteil verbunden ist, während der Elastomerkörper 3 direkt in einer Aufnahmebohrung eines zweiten Fahrzeugteiles 8 aufgenommen ist.

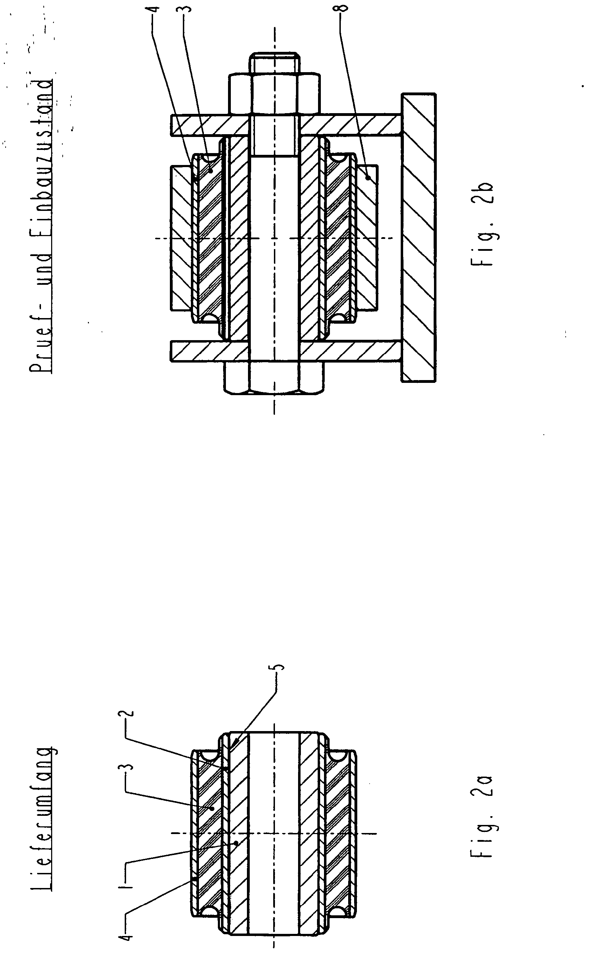

Das in Figur 2a dargestellte Gummilager besteht wiederum aus dem Innenrohr 1, der Beschichtung 5, welche am Innenumfang des Zwischenteiles 2 angeordnet ist, dabei ist der Elastomerkörper 3 durch ein Außenrohr 4 koaxial umgeben. Im Einbauzustand gemäß Figur 2b ist das Außenrohr 4 in einer Aufnahmebohrung eines zweiten Fahrzeugteiles 8 durch Reduzierung des Außendurchmessers eingebracht. Hierdurch erhöht sich sowohl die Vorspannung im Elastomerkörper 3 wie auch die Dauerhaltbarkeit des Gummilagers insgesamt. Durch die Verwendung der Gleitschicht 5 am Innenumfang des Zwischenteiles 2 oder auch am Außenumfang des Innenrohres 1 ist eine rückstellmomentfreie Verdrehung des Elastomerkörpers 3 gegenüber dem Innenrohr 1 gewährleistet.

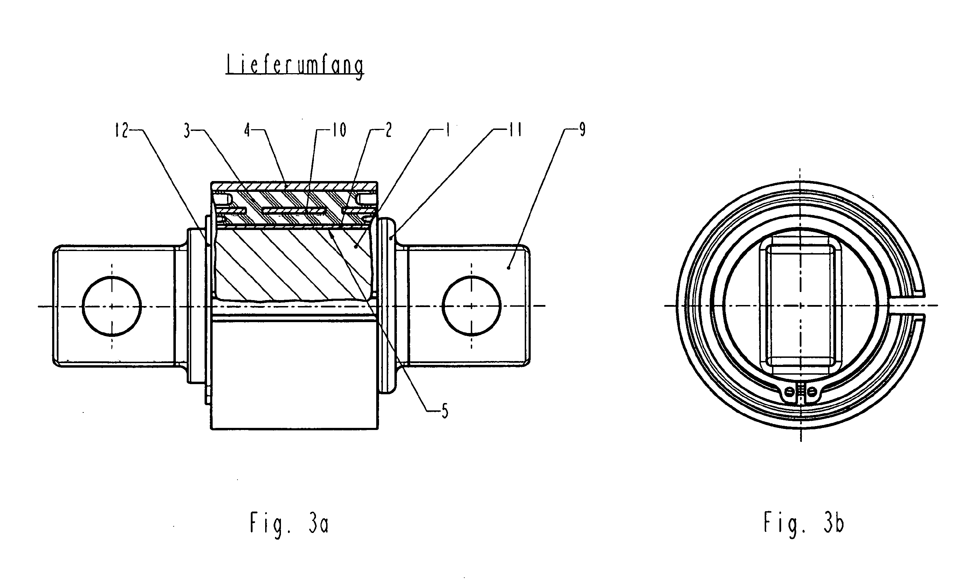

Aus der Figur 3 ist ein Gummilager zu entnehmen, bei dem das Innenteil 1 mit Befestigungselementen 9 versehen ist. Auf diesem Innenteil 1 ist das Zwischenteil 2 angeordnet, wobei der Elastomerkörper 3 einerseits mit einem Außenrohr 4 koaxial umgeben ist und der Elastomerkörper 3 des weiteren mit einer Metallarmierung 10 verstärkt ist. Als axiale Sicherung ist das Innenteil 1 einerseits mit einem Flansch 11 und andererseits mit einem Sprengring 12 versehen. Hierdurch wird das Außenrohr 4 zusammen mit dem Zwischenteil 2 und dem Elastomerkörper 3 zusätzlich axial entsprechend gesichert.

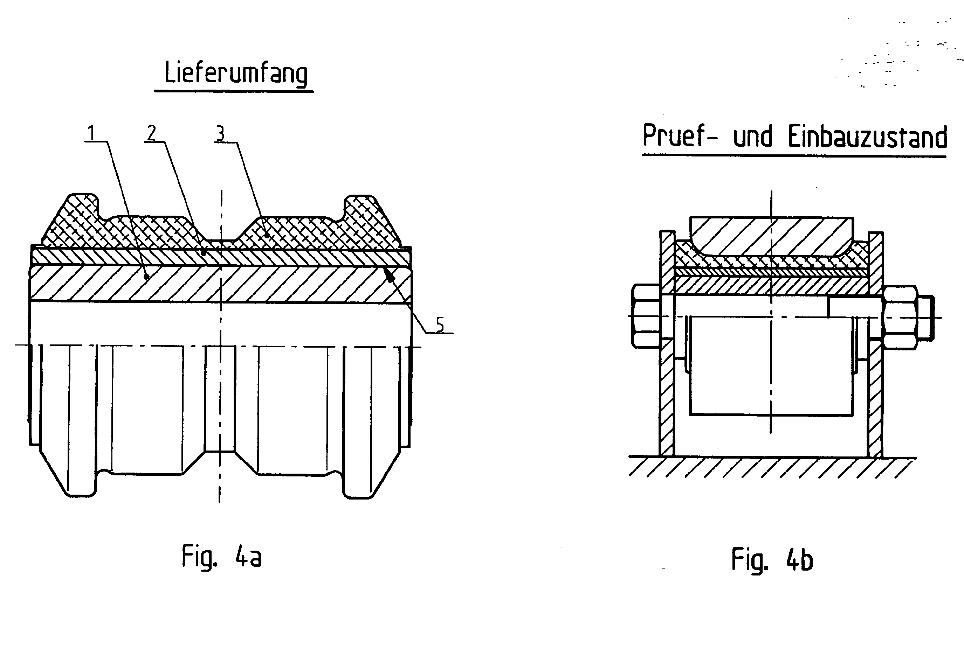

Eine weitere Einbauvariante ist aus Figur 4a und 4b zu entnehmen, wobei hier wiederum auf dem Innenrohr 1 das Zwischenrohr 2 angeordnet ist, während der Elastomerkörper 3 mit einer profilierten äußeren Umfangsfläche versehen ist. Das Zwischenteil 2 sieht wiederum die Gleitschicht 5 vor. Aus der Figur 4b ist der entsprechende Einbauzustand dieses Gummilagers zu entnehmen.

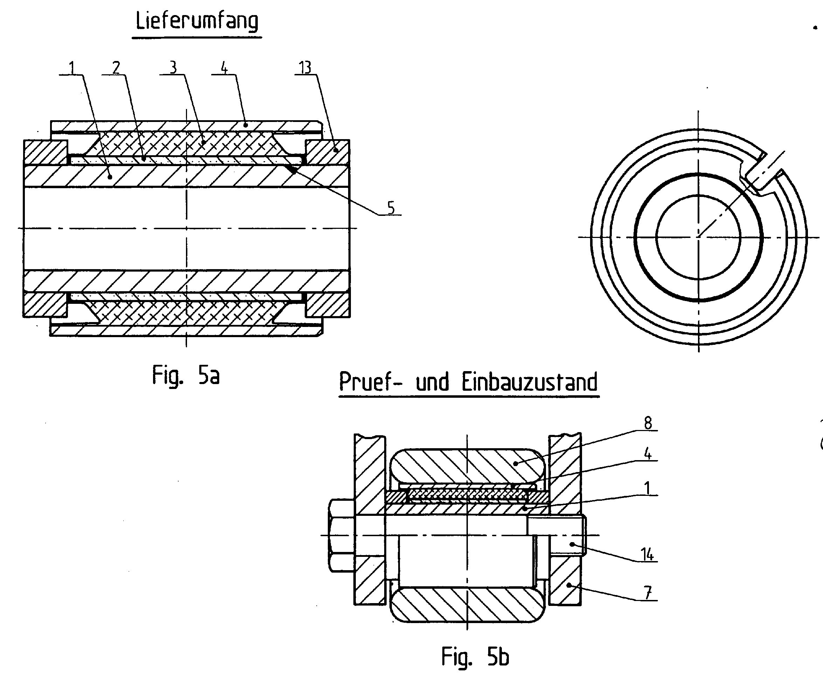

Die Figur 5a und 5b zeigt eine weitere Ausführungsform bei der wiederum auf dem Innenrohr 1 das Zwischenteil 2 zusammen mit dem Elastomerkörper 3 angeordnet ist. Die Gleitschicht 5 befindet sich am Innenumfang des Zwischenteiles 2, während das Innenrohr 1 mit einem Stützring 13 versehen ist, der gegenüber dem Außenrohr 4 als Radialanschlag und kardanischer Anschlag ausgebildet ist. Figur 5b zeigt die zugehörige Einbausituation, wobei das Außenrohr 4 in einem zweiten Fahrzeugteil 8 aufgenommen ist, während das Innenrohr 1 über einen Bolzen 14 am ersten Fahrzeugteil 7 befestigt ist.

### Bezugszeichenliste

- 1 -: Innenrohr
- 2 -: Zwischenteil
- 3 -: Elastomerkörper
- 4 -: Außenrohr
- 5 -: Gleitschicht
- 6 -: Radialansatz
- 7 -: erstes Fahrzeugteil
- 8 -: zweites Fahrzeugteil
- 9 -: Befestigungselemente
- 10 -: Metallarmierung
- 11 -: Flansch
- 12 -: Sprengring
- 13 -: Stützring
- 14 -: Bolzen

## Patentansprüche

1. Verfahren zur Herstellung eines Gummilagers für Fahrwerksteile in Kraftfahrzeugen, bestehend aus
- einem in ein erstes Fahrzeugteil (7) einbaubaren Innenrohr (1),
- einem darauf gleitend drehbeweglich, konzentrisch angeordneten Zwischenteil (2), welches auf seiner inneren Umfangsfläche mit einer Gleitschicht (5) versehen ist und über die axiale Länge einen Spalt aufweist,
- einem das Zwischenteil (2) festhaftend umschließenden, in ein zweites Fahrzeugteil (8) einbaubaren Elastomerkörper(3),
**dadurch gekennzeichnet,**
**dass** während der Vulkanisation der Spalt des Zwischenteils (2) derart zugedrückt wird, dass kein Elastomer in das Bauteil überläuft.

2. Verfahren zur Herstellung eines Gummilagers für Fahrwerksteile in Kraftfahrzeugen, bestehend aus
- einem in ein erstes Fahrzeugteil (7) einbaubaren Innenrohr (1),
- einem darauf gleitend drehbeweglich, konzentrisch angeordneten Zwischenteil (2), welches auf seiner inneren Umfangsfläche mit einer Gleitschicht (5) versehen ist und über die axiale Länge einen Spalt aufweist,
- einem das Zwischenteil (2) festhaftend umschließenden, in ein zweites Fahrzeugteil (8) einbaubaren Elastomerkörper (3), wobei der Elastomerkörper (3) mit einem Außenrohr (4) umgeben ist
**dadurch gekennzeichnet,**
**dass** während der Vulkanisation der Spalt des Zwischenteils (2) derart zugedrückt wird, dass kein Elastomer in das Bauteil überläuft.

3. Verfahren zur Herstellung eines Gummilagers nach Anspruch 1 oder 2,
**dadurch gekennzeichnet,**
**dass** der Spalt des Zwischenteils (2) mittels werkzeugseitiger Vorkehrungen zugedrückt wird.

4. Verfahren zur Herstellung eines Gummilagers nach einem der vorherigen Ansprüche,
**dadurch gekennzeichnet,**
**dass** die Stirnflächen des Zwischenteils (2) abgedrückt werden.

## Claims

1. Method for producing a rubber bearing for chassis parts in motor vehicles, consisting of
- an inner tube (1) which can be fitted in a first vehicle part (7),
- an intermediate part (2) which is disposed concentrically and so as to slide in a rotatable manner thereon, is provided at its inner circumferential surface with a slide layer (5) and has a gap over the axial length,
- an elastomer body (3) which encloses the intermediate part (2) in an adherent manner and can be fitted in a second vehicle part (8),
**characterised in**
**that** the gap of the intermediate part (2) is closed by pressure during vulcanisation such that no elastomer overflows into the component.

2. Method for producing a rubber bearing for chassis parts in motor vehicles, consisting of
- an inner tube (1) which can be fitted in a first vehicle part (7),
- an intermediate part (2) which is disposed concentrically and so as to slide in a rotatable manner thereon, is provided at its inner circumferential surface with a slide layer (5) and has a gap over the axial length,
- an elastomer body (3) which encloses the intermediate part (2) in an adherent manner and can be fitted in a second vehicle part (8), wherein the elastomer body (3) is surrounded by an outer tube (4),
**characterised in**
**that** the gap of the intermediate part (2) is closed by pressure during vulcanisation such that no elastomer overflows into the component.

3. Method for producing a rubber bearing according to Claim 1 or 2,
**characterised in**
**that** the gap of the intermediate part (2) is closed by pressure by means of measures taken with tools.

4. Method for producing a rubber bearing according to any one of the preceding Claims,
**characterised in**
**that** the front faces of the intermediate part (2) are covered.

## Revendications

1. Procédé de fabrication d'un palier en caoutchouc pour des parties de train de roulement dans des véhicules automobiles, composé :
- d'un tube intérieur (1) susceptible d'être intégré dans une première partie de véhicule (7),
- d'une partie intermédiaire (2) monté sur lui avec mobilité en rotation et glissement, disposée concentriquement, qui est munie, sur sa face périphérique intérieure, d'une couche de glissement (5) et présente une fente sur la longueur axiale,
- d'un corps en élastomère (3), entourant la partie intermédiaire (2) avec une adhésion ferme et susceptible d'être intégré dans une deuxième partie de véhicule (8),
**caractérisé en ce que**,
pendant la vulcanisation, la fente de la partie intermédiaire (2) est comprimée, de manière qu'aucun élastomère ne passe dans le composant.

2. Procédé de fabrication d'un palier en caoutchouc pour des parties de train de roulement dans des véhicules automobiles, composé :
- d'un tube intérieur (1) susceptible d'être intégré dans une première partie de véhicule (7),
- d'une partie intermédiaire (2) monté sur lui avec mobilité en rotation et glissement, disposée concentriquement, qui est munie, sur sa face périphérique intérieure, d'une couche de glissement (5) et présente une fente sur la longueur axiale,
- d'un corps en élastomère (3), entourant la partie intermédiaire (2) avec une adhésion ferme et susceptible d'être intégré dans une deuxième partie de véhicule (8), le corps en élastomère (3) étant entouré par un tube extérieur (4),
**caractérisé en ce que**,
pendant la vulcanisation, la fente de la partie intermédiaire (2) est fermée par compression, de manière qu'aucun élastomère ne passe dans le composant.

3. Procédé de fabrication d'un palier en caoutchouc selon la revendication 1 ou 2,
**caractérisé en ce que**
la fente de la partie intermédiaire (2) est fermée par compression en prenant des dispositions côté outil.

4. Procédé de fabrication d'un palier en caoutchouc selon l'une des revendications précédentes,
**caractérisé en ce que**
les faces frontales de la partie intermédiaire (2) sont comprimées.
